# EUROPEAN PATENT SPECIFICATION

(11) **EP 1 488 603 B1**
(45) Date of publication and mention of the grant of the patent: **28.02.2007**
(21) Application number: 03745322.2
(22) Date of filing: 21.03.2003
(51) Int. Cl.: H04L 29/06, H04L 12/24

(54) **SECURE REMOTE CONTROL**
SICHERE FERNSTEUERUNG
COMMANDE A DISTANCE SECURISEE

(30) Priority: 28.03.2002 EP 02252324; 20.12.2002 GB 0229831
(43) Date of publication of application: 22.12.2004
(73) Proprietor: BRITISH TELECOMMUNICATIONS public limited company, London EC1A 7AJ (GB)
(72) Inventor: HERON, Andrew Peter, Stowmarket, Suffolk IP14 2JE (GB); BURGESS, Gary Dean, Ipswich, Suffolk IP4 5HR (GB)
(74) Representative: Roberts, Simon Christopher
(86) International application number: PCT/GB2003/001202
(87) International publication number: WO 2003/084167

(56) References cited:
- US-B1- 6 202 156
- US-B1- 6 219 706

## Description

The present invention relates to the field of remote control of devices over a network, particularly but not exclusively to the remote control of conferencing equipment based at a customer's premises.

With the general trend towards networking various equipment located within and across an organisation's sites, the potential for remotely managing such equipment is increasing. Such remote management can be done from a central location within the organisation or, in many cases, from a location external to the organisation. For example, in the case of conferencing equipment used for audio and video conferencing and the like, there is a need for external remote control of the equipment to set up conferencing facilities on demand.

The equipment installed at the organisation's premises, for example, multipoint control units (MCUs), may be of mixed manufacturer origin and therefore use different and usually proprietary control protocols, although these are commonly transported over an IP (Internet Protocol) network layer usually including the TCP (Transport Control Protocol) transport layer protocol.

By convention, the control protocol in use is indicated by a TCP field called the port number. Problems arise when implementing control of diverse pieces of equipment over networks that include firewalls, as the firewall has to be opened for every different combination of port number and IP address required by the various control protocols. The opening of multiple holes in the firewall is usually resisted by firewall managers, as it increases management complexity and greatly reduces security.

In addition, many pieces of equipment are controlled using Simple Network Management Protocol (SNMP), which it is inadvisable to allow through firewalls, as much network equipment is itself managed using this protocol.

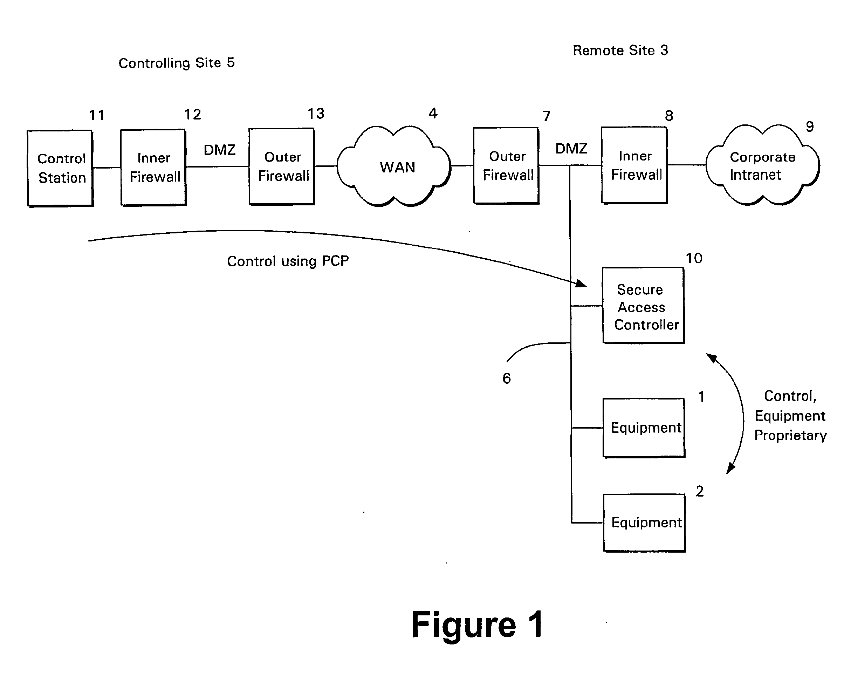

One configuration which addresses the above problem is shown in Figure 1, illustrating the control of equipment 1, 2 at a remote site 3. The equipment 1, 2 is controlled over an insecure wide area network 4 from a controlling site 5. The equipment 1, 2 is located on a local area network 6 in a 'demilitarised zone' DMZ between an outer firewall 7 facing the insecure network 4 and an inner firewall 8 protecting a corporate intranet 9. A device referred to herein as a secure access controller 10, is located on the local area network in the de-militarised zone DMZ. The secure access controller 10 is an application program running on a conventional computer, which acts as a server and implements communications conforming to a single protocol, referred to herein as peripheral control protocol (PCP). It interfaces to the individual pieces of equipment 1, 2 via equipment drivers.

The equipment 1, 2 in the DMZ can then be remotely controlled by a client at the controlling site 5 connecting to the secure access controller 10. The equipment at the controlling site 5 comprises a control station 11 protected from the insecure network 4 by inner and outer firewalls 12, 13. The control station 11 connects to the secure access controller 10, using PCP over port 1073, which has been registered for this purpose with IANA, the Internet Assigned Numbers Authority. Therefore the secure access controller 10 requires port 1073 in the outer firewall 7 to be open for incoming connections. This port also has to be open for outbound connections on the inner and outer firewalls 12, 13 at the controlling site 5.

In the event that equipment is connected to the corporate intranet 9, access to the corporate intranet 9 through the inner firewall 8 is required. Port 1073 would therefore need to be opened on the inner firewall 8. Since the inner firewall 8 is the final line of defence for the corporate intranet 9, the opening of this connection inevitably poses an additional security risk.

The present invention aims to address the above problems.

According to one aspect of the invention, there is provided a system for remotely controlling one or more devices over a communications network, wherein the network includes first and second network sides and means for controlling access between the first and second sides, the system comprising a first controller connected to the network on the first network side for receiving device control messages from a control station and a second controller connected to the network on the second network side, for receiving the device control messages from the first controller and controlling the one or more devices in response thereto, wherein the first controller is configured to send the device control messages to the second controller after initiation of a connection to the first controller by the second controller.

The access control means, for example a firewall, can be configured to prevent connection requests from the first controller from reaching the second controller.

By only allowing a communications path to be set up between the first and second controllers at the instigation of the second controller, no inbound connections are made to the second network side, for example a corporate intranet. The only connections which are permitted through the firewall are outbound connections, so significantly enhancing security.

By keeping the connection open once it is made, device control messages can be forwarded to the second controller whenever they are received at the first controller, without requiring the first controller to request a connection to the second controller, which would be an impermissible inbound connection.

According to the first aspect of the invention, there is also provided a method of remotely controlling one or more devices over a communications network, wherein the network includes first and second network sides and means for controlling access between the first and second sides, the method comprising initiating a connection to a first controller connected to the network on the first network side from a second controller connected to the network on the second network side and sending device control messages from a control station to the first controller and then from the first controller to the second controller.

According to a second aspect of the invention, there is provided a system for remotely monitoring one or more devices over a communications network, wherein the network includes first and second network sides and means for controlling access between the first and second sides, the system comprising a monitor station connected to the network on the first network side for receiving information concerning said one or more devices, a first controller connected to the network on the second network side for receiving said information and sending said information to the monitor station and a second controller for monitoring the one or more devices and sending said information to the first controller, wherein the first controller is configured to send said information to the monitor station after initiation of a connection to the first controller by the monitor station.

By only allowing a communications path to be set up between the monitor station and the first controller at the instigation of the monitor station, no inbound connections are made to the controlling site. The only connections which are permitted through the access control means, for example, a firewall, are outbound connections, so significantly enhancing security. Similarly, event notifications are made on an outbound connection from the second controller to the first controller, so no inbound connections need to be made through the firewall separating the first controller from the second controller. Events occurring at a remote site can therefore be securely monitored.

In response to the monitored events, device control messages can be generated and sent to control the devices.

According to the second aspect of the invention, there is also provided a method of remotely monitoring one or more devices over a communications network, wherein the network includes first and second network sides and means for controlling access between the first and second sides, the method comprising initiating a connection to a first controller connected to the network on the second network side from a monitor station connected to the network on the first network side and sending event information relating to the one or more devices from the second controller to the first controller and then from the first controller to the monitor station.

Embodiments of the invention will now be described, by way of example, with reference to the accompanying drawings, in which:
Figure 1, which has already been described above, illustrates a network configuration which permits remote control of equipment at a remote site using a secure access controller;
Figure 2 illustrates a network configuration according to one aspect of the invention, in which a client controller communicates with a proxy controller to enable remote control of equipment at a remote site;
Figure 3 illustrates the set-up of a connection between the client and proxy controllers;
Figure 4 is a schematic diagram illustrating a remote control system for setting up conference;
Figure 5 is a flowchart illustrating the operation of the system of Figure 4;
Figure 6 illustrates a network configuration according to a second aspect of the invention, in which a client controller communicates with a monitor station via a proxy controller to permit the monitoring of unsolicited events, such as alarms, at a remote site;
Figure 7 illustrates the set-up of a connection between the monitor station and the proxy controller;
Figure 8 is a flowchart illustrating the operation of the system of Figure 6;
Figure 9 illustrates a network configuration according to a third aspect of the invention, in which a client controller communicates with a proxy controller and the proxy controller in turn communicates with a central controller to enable remote control of equipment at a remote site; and
Figure 10 illustrates the set-up of a connection between the proxy and central controllers.

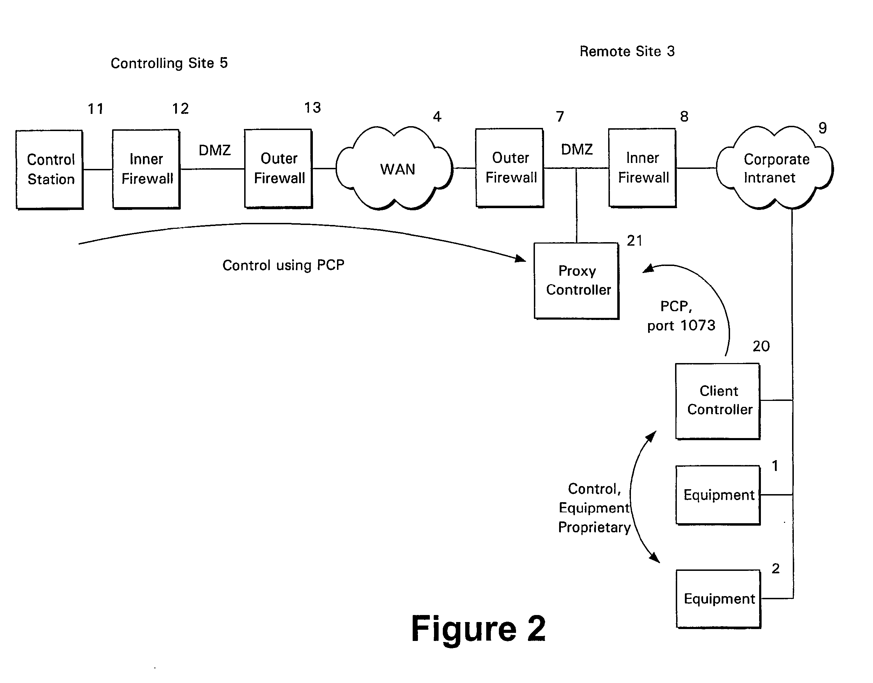

Figure 2 is in certain basic aspects of network arrangement similar to Figure 1 and the same reference numerals are used to identify common aspects. As in Figure 1, the equipment to be controlled 1, 2 is located at a remote site 3 and is remotely controllable over a network 4 from a controlling site 5. However, in contrast to the arrangement shown in Figure 1, the equipment 1, 2 is connected to the corporate intranet 9 at the remote site 3, rather than being located in the DMZ. A secure access controller 20, referred to herein as a client controller, is also connected to the corporate intranet 9. A second secure access controller 21, referred to herein as a proxy controller, is located in the demilitarised zone DMZ between an outer firewall 7 facing the network 4 and an inner firewall 8 facing the corporate intranet 9. The client controller 20 interfaces to the individual pieces of equipment 1, 2 via equipment drivers, and both the client and proxy controllers 20, 21 operate according to peripheral control protocol (PCP), using PCP over port 1073. PCP is a generic protocol which enables communication with any type of equipment. The structure and functionality of the secure access controllers 20, 21 will be described in more detail below.

The inner firewall 8 does not permit inbound connections to the client controller 20 on port 1073. It is configured to permit outbound connections on port 1073 only. Therefore, the security of the corporate network 9 is maintained.

Each of the client and proxy controllers 20, 21 comprises an application program running on a conventional networked personal computer (PC). The computer runs under, for example, the Windows NT™ operating system and as well as the secure access controller software, has all the other necessary hardware and software to enable it to perform its function. The entire network arrangement operates in accordance with the TCP/IP set of protocols, although PCP is transportable over a variety of protocols, including TCP/IP, HTTP, T.120 and SNMP.

Each of the control station 11, the proxy controller 20 and the client controller 21 are issued with certificates for the purposes of authentication. As, generally, there is a closed group of authorised clients, the certificates are authorised locally by an internal certification authority, providing for a very secure system.

The operation of the remote control system and the functionality of each controller 20, 21 within it is now described in detail below.

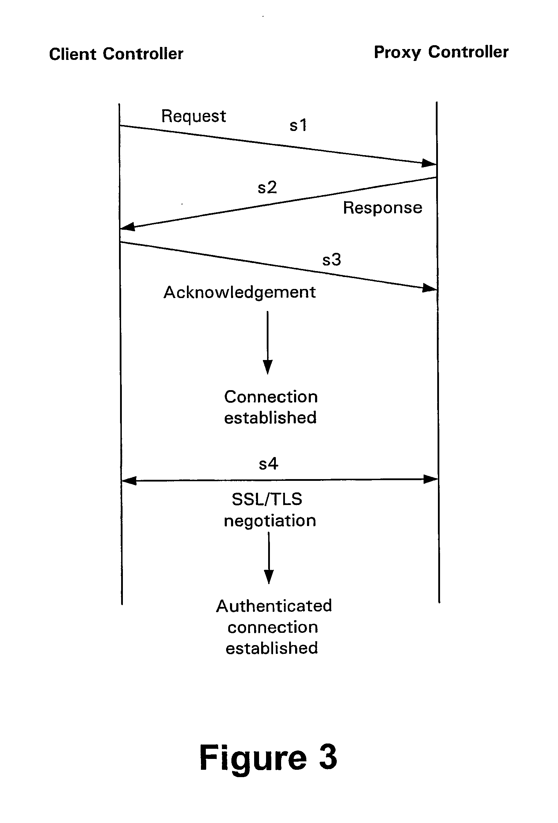

Referring to Figure 3, on startup, for example when the client controller 20 is first booted up, the client controller 20 sends a TCP (Transport Control Protocol) connection request to the proxy controller 21 on port 1073 (step s1). On the assumption that the proxy controller 21 is already online, it acts as a server listening for incoming connection requests. When it receives the connection request, it returns a response to the client controller 20 (step s2), which in turn sends an acknowledgment to the proxy controller 21 (step s3), resulting in the establishment of a TCP connection between the two, in a way which is standard and well known. Subsequently, mutual authentication and encryption set-up is carried out between the client and proxy controllers 20, 21 (step s4) using the industry standard Secure Sockets Layer (SSL) protocol, or the latest version known as the Transport Layer Security (TLS) protocol, in a way which is, once again, very well known. Once a properly authenticated connection between the client controller 20 and the proxy controller 21 is established as a result of this procedure, the connection remains open, subject to equipment failure, scheduled maintenance and so on, ready for the transfer of instructions from the proxy controller 21. The client controller 20 will continually try and re-establish the connection if it is lost. It may have to drop and re-establish the connection on a scheduled basis if the inner firewall 8 only allows continuous connections to exist for a certain maximum time.

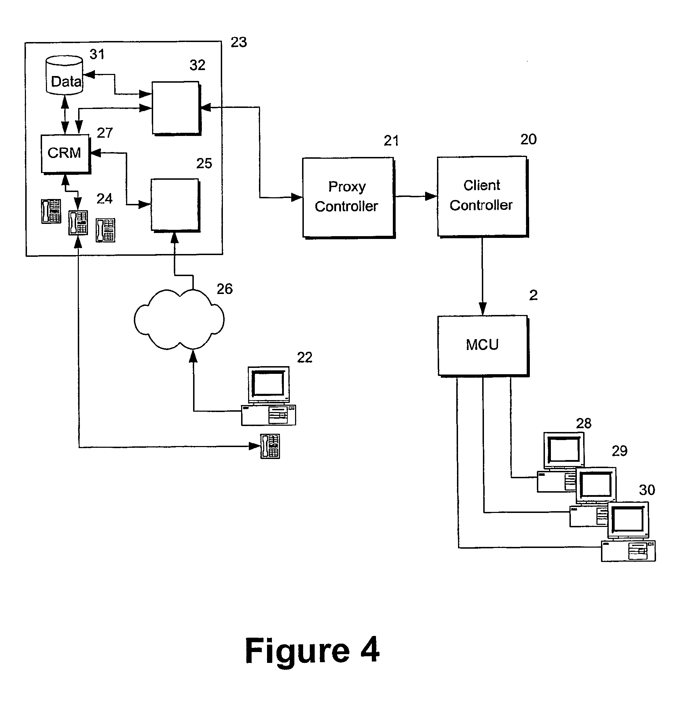

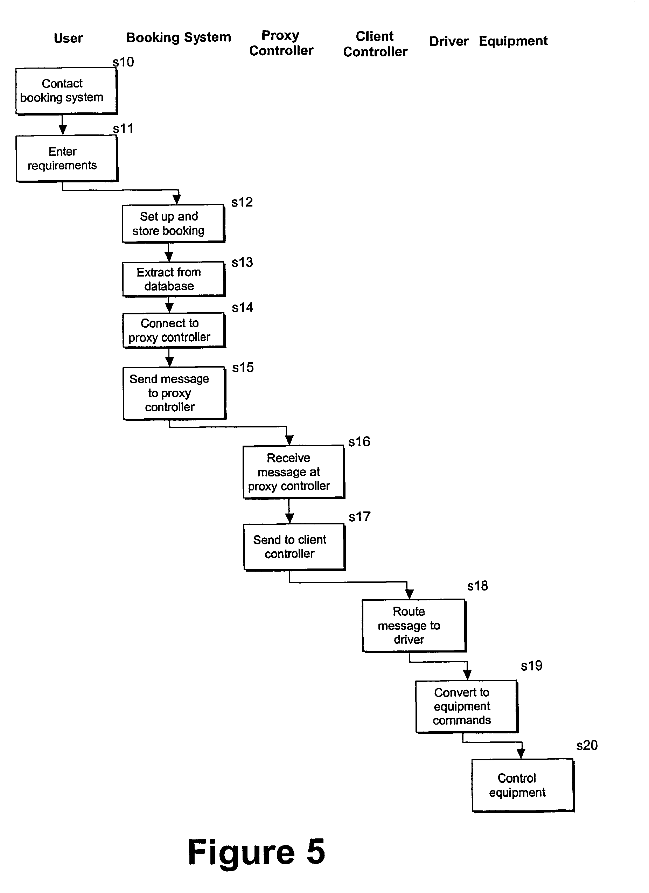

Referring to Figures 4 and 5, when a user 22 requires a conference, for example a video conference, to be arranged, he or she contacts a conference control system 23 at the controlling site 5 (step s10). The conference control system 23 includes, for example, a plurality of telephone operators 24, and an automated booking system 25 contactable over the Internet 26. The operators and automated booking system are connected to a conference resource manager CRM 27. The user provides the required details of the requested conference, for example the required time, selected participants 28, 29, 30 and so on and these are supplied to the CRM 27 by the booking system 25 or by an operator 24 (step s11). The CRM 27 determines whether all the necessary resources are available at the time for a given conference booking request, accepts or rejects bookings on that basis, stores the booking in a database 31 and responds to the operator accordingly (step s12). The booking includes a conference identification number allocated to the conference to uniquely identify it, together with all the necessary control information required to set up the equipment for the conference. The CRM 27 refers to pre-allocated identification numbers to identify the equipment to be controlled and is allocated its own identification number on connection to the proxy controller 21. The equipment to be controlled is, in this example, a multipoint control unit (MCU) 2 for controlling videoconferencing. A control/interface module 32 then polls the database 31 to extract the relevant information (step s13) and establishes a connection with the proxy controller 21 in a conventional way over port 1073, using the TCP and SSL/TLS protocols, as described above in relation to the connection between the client and proxy controllers 20, 21 (step s14).

The control/interface module 32 uses the PCP protocol, which will be described in more detail below, to communicate the control information required to set up the conference to the proxy controller 21 (step s15).

The PCP protocol is based on strings of 8-bit ASCII text characters defining a set of simple commands, such as 'Define Conference', 'Extend Conference' and so on.

For example, to set up a conference, the following message is sent, which comprises a series of commands concatenated into a single string. Each command comprises a string of 8-bit ASCII characters separated by colons and enclosed in square brackets.

For example, a simple 2B H.320 audio/video dial-out conference definition may be as follows:
[RT:D2:S1][CD:|1234:Cconf1 1:H1:B1:L60:N3:U3]
[RT:D2:S1][PD:I1234:Pparticipant1:J1:B2:DO:C1:N621455:M633600:C2:N621456: M633601]
[RT:D2:S1][PD:I1234:Pparticipant2:J1:B2:DO:C1:N612285:M633602:C2:N621286: M633603]
[RT:D2:S1][PD:I1234:Pparticipant3:J1:B2:DO:C1:N620479:M633604:C2:N620470: M633605]

The first command in the message comprises a command code which is a two-letter pair followed by parameters. The code 'RT' is a routing command, which defines the source and destination for the message. This is followed by a parameter 'D', the function of which is to identify the destination, and a parameter 'S' which functions to identify the source, each in combination with a value which is unique for each site. So in this case, the Routing command RT specifies that the message is intended for the piece of equipment whose ID number is 2 (:D2) at the site being addressed and the source CRM has a client ID of 1 (:S1).

The second command includes a 'Define Conference' command code (CD), which defines the conference specific parameters. The conference ID number (:11234) is defined by the CRM 27 to uniquely identify the conference. Other parameters shown set in the message above are the conference name (:Cconf1), the fact that it is H.320 (:H1), uses two B channels (:B1), is 60 minutes long (:L60) and has three participants (:N3), of which all three have definitions to follow (:U3). Any other necessary conference parameters are also set in this command, or in an options command following it. Defaults can be provided for any parameters which are not explicitly set. Some of the parameters, for example B, are enumerated types, so the number shown is a type rather than an actual value.

As no time parameter (:T) is specified in the conference definition, then it is assumed to be required straight away. Conferences with a time in the future can be booked if the remote site has a local booking facility, for example, a local CRM. The message is addressed to the local CRM, which is treated in the same way as any other equipment by the secure access controller.

A conference is not fully defined until all the participants have been specifically defined using the 'Participant Definition' command (PD).

The Participant Definition commands PD supply the participant names (:P), their bitrate (:J), the fact that they dial out (:D) and gives the customer number (:N) and MCU port number (:M) for each channel (:C). The number of channels defined is given by (:B), in this case (:B2) specifies two channels.

Referring again to Figure 5, on receipt of the message at the proxy controller 21 (step s16), the proxy controller 21 forwards the message over the previously established communications path to the client controller 20 (step s17). At the client controller 20, the message is routed to the relevant driver for the equipment identified by ID number D2 (step s18). The equipment driver is a Windows .dll file which is specific to the equipment being controlled, in an exactly analogous way to printer and other hardware drivers. The driver converts the PCP message into the equipment specific protocol (step s19) and sends it to the equipment to effect the required control (step s20). For example, the MCU 2 then begins the conference by connecting the participants 26, 27, 28. In the event that the manufacturer provides the equipment 1, 2 with a server type interface for control purposes, this can be used by the driver to control the equipment.

Most conference commands have a response. For example, if the above conference starts successfully, a possible response is:
[RT:D1:S2][CS:11234:L7777:S2:T2000.03.01.12.30][PS:11234:Pparticipant1:S2]
[RT:D1:S2][PS:|1234:Pparticipant2:S2][PS:|1234:Pparticipant3:S2]

The Conference State (CS) command indicates that the conference has been started (:S2) at the stated time and the Participant State (PS) commands indicate that the participants have all been added and have joined the conference (:S2). The above commands also indicate that the conference has been allocated .a local ID by the MCU (:L7777).

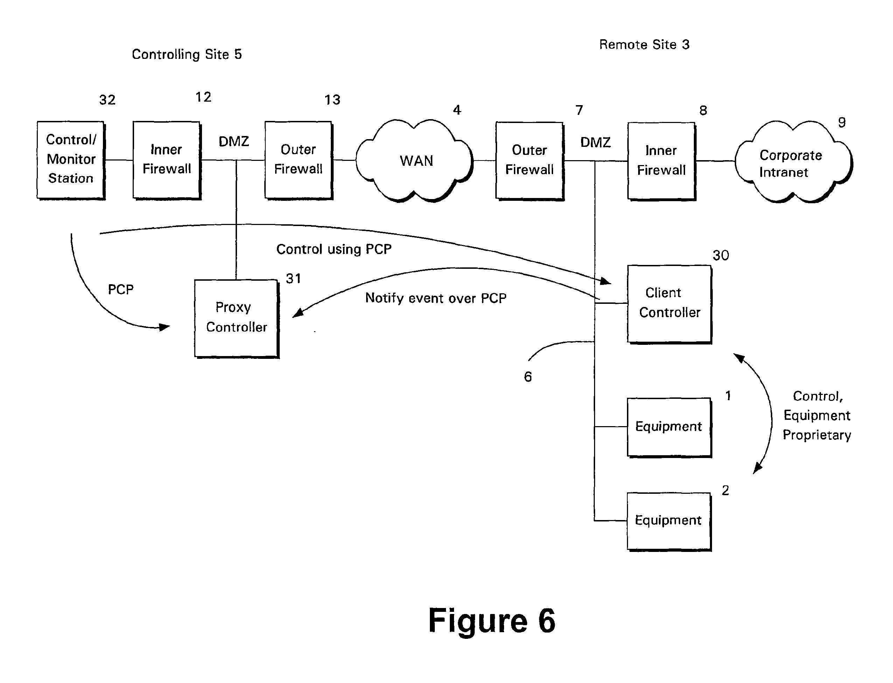

The responses are returned to the conference control system 23 to indicate progress of the conference and the connection between the control/interface module 32 and the proxy controller 21 can then be closed. Further unscheduled responses can be returned, for example, when a participant leaves a conference early or when the conference ends early; these require the control/interface module 32 to hold its connection with the proxy controller 21 open. An alternative architecture for the monitoring of unsolicited responses will be described below with reference to Figure 6.

The conference control system 23 therefore achieves remote control of the equipment 1, 2 in a relatively secure manner. Although this is done over a connection through the internal firewall 8 into the corporate intranet 9, the connection is initiated by the client controller 20 and cannot be initiated by the proxy controller 21, since the necessary port 1073 on the inner firewall 8 is not configured to be open for inbound connections.

While a limited number of the available PCP protocol commands and options have been set out above, the protocol can include a large number of commands and options to implement the required equipment control. It will be understood that other protocol commands and options can be provided by modifying the secure access controller software to generate and process these commands. For example, options can be provided under the CD command to specify a conference password or video resolution and video frame rate for a video conference. Commands can be added to extend a conference currently in progress or add participants, to terminate participants, to extract billing information from the MCU 2 and to perform a variety of maintenance tasks for determining correct operation and correcting errors. Commands can also be introduced for controlling equipment other than conferencing equipment.

In a further embodiment illustrated in Figure 6, the network arrangement at a remote site 3 is the same as that shown in Figure 1, with the equipment 1, 2 to be controlled being located on a local area network 6 in a 'demilitarised zone' DMZ between an outer firewall 7 facing an insecure network 4 and an inner firewall 8 protecting a corporate intranet 9.

A secure access controller 30 for controlling the equipment 1, 2 is also connected to the local area network 6. However, the secure access controller 30 is not directly controlled by a control station, but acts as a client controller to a proxy controller 31 located in the DMZ between the inner and outer firewalls 12, 13 at the controlling/monitoring site. In this embodiment, the control station comprises a control/monitoring station 32.

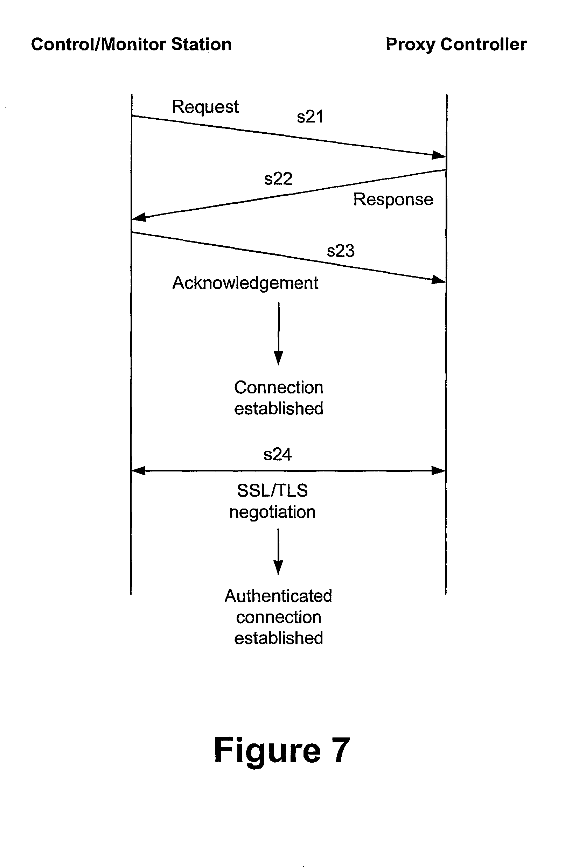

Referring to Figure 7, the set-up of a connection between the control/monitoring station 32 and the proxy controller 31 is entirely parallel to the set-up of the connection between the client and proxy controllers 20, 21, as shown in Figures 2 and 3. Therefore, the control/monitoring station 32 initiates the connection over port 1073 (step s21), the proxy controller responds (step s22), the control/monitoring station acknowledges (step s23) and SSL/TLS negotiation (step s24) results in an authenticated connection being established. The proxy controller 32 is prevented from initiating a connection to the control/monitoring station 32 by the inner firewall 12 at the controlling site 5. Once established, the connection between the control/monitoring station 32 and the proxy controller 31 remains open, in an analogous way to the connection between the client and proxy controllers 20, 21 described in relation to Figure 2 above.

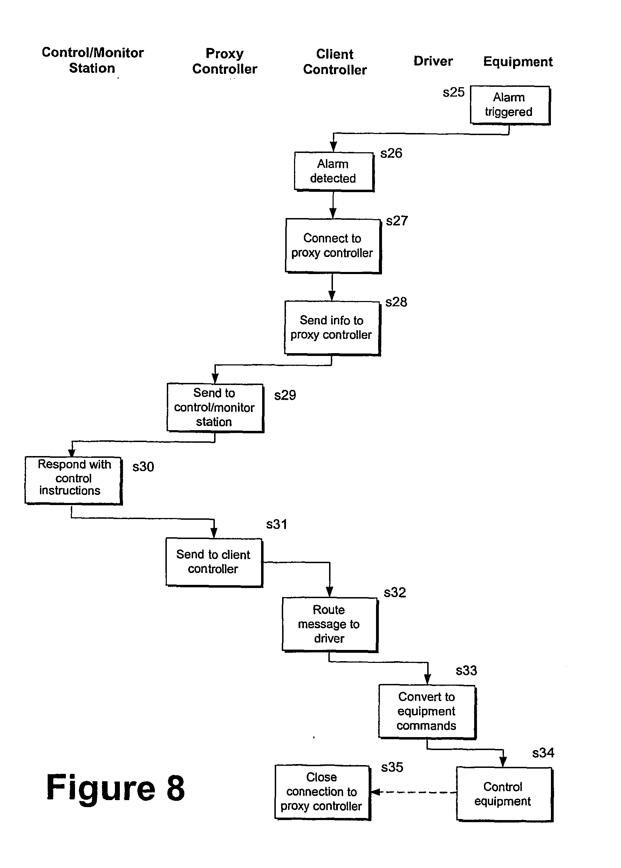

Referring to Figure 8, on the occurrence of an event at the remote site, for example an alarm on an item of equipment being triggered (step s25), the client controller 30 detects the event (step s26) and opens a secure connection to the proxy controller 31 using PCP over port 1073 as described above (step s27). The event information is sent to the proxy controller (step s28), which in turn relays it back to the control/monitoring station 32 (step s29) over the previously established connection. The control/monitoring station 32 then sends the appropriate control information back to the proxy controller 31 (step s30), which forwards it to the client controller 30 (step s31). As in the case of the previous embodiment, the message is passed to the appropriate equipment driver (step s32), which converts the PCP message into the device specific commands required to control the equipment 1, 2 (step s33) and sends the commands to the equipment where they are used to achieve the necessary control (step s34). The connection between the client and proxy controllers 30, 31 is then closed (step s35). It opens again in response to further unsolicited events at the remote site.

In this example of the invention, inbound connections are prevented from being made to both the control/monitoring station 32 and the remote site 3, so providing a relatively secure control and monitoring system.

Although the remote site 3 in this embodiment has been described as having the architecture of Figure 1, where the client controller 30 and equipment 1, 2 is located in the DMZ, it could alternatively have the architecture of Figure 2, where the client controller 30 and equipment 1, 2 are connected to the corporate intranet 9.

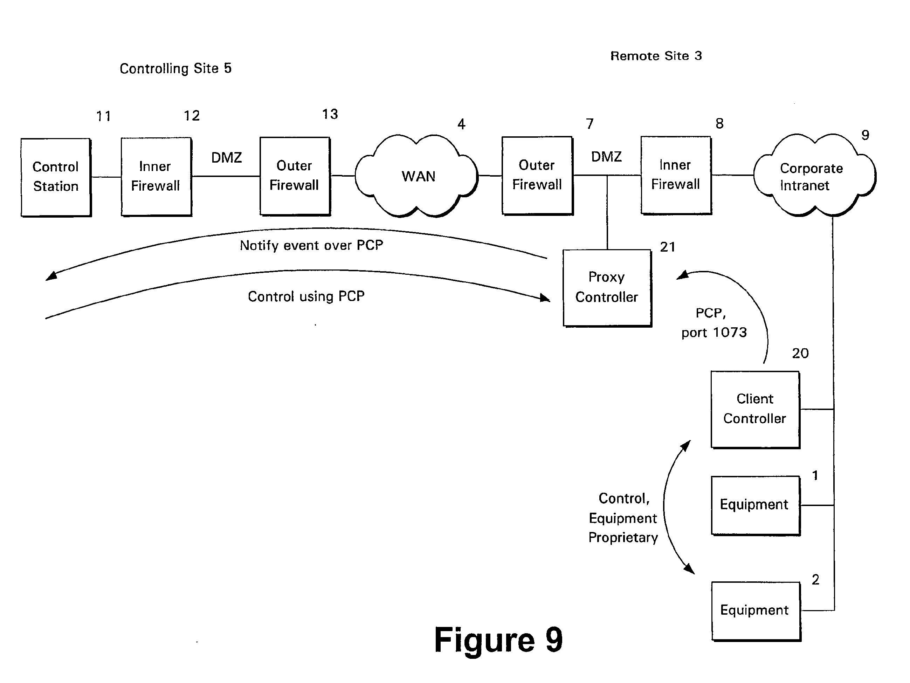

In a third embodiment illustrated in Figure 9, the network arrangement at a remote site 3 is the same as that shown in the embodiment of Figure 2, the same reference numerals being used to identify the same features. As in Figure 2, the equipment to be controlled 1, 2 is located at a remote site 3 and is remotely controllable over a network 4 from a controlling site 5. However, in contrast to the embodiment described above with reference to Figure 2, the outer firewall 7 of the remote site 3 does not permit inbound connections to the proxy controller 21 on port 1073. It is configured to permit outbound connections on port 1073 only. Thus, in applying the same principles as applied to preserve security of the corporate network 9 in the embodiment of Figure 2 above, the security of the proxy controller 21 is similarly maintained. There is a further advantage that the configuration of the outer firewall 7 at each remote site 3 is simplified in that it does not need to be opened up to connection requests from one or more control stations 11, permitting a wider range of applications of the arrangement.

Referring to Figure 9, in operation a secure connection is established between the client controller 20 and the proxy controller 21 on port 1073 in an identical manner to that described above with reference to Figure 3. However, with in-bound connections through the outer firewall 7 being barred, the proxy controller 21 must initiate a secure connection with the control station 11 rather than the control station 11 initiate the connection with the proxy controller 21 as in the embodiments above. The proxy controller 21 may be triggered to establish the connection on port 1073 with the control station 11, through the outer firewall 7, either upon receipt of a connection request from the client controller 20 or at some earlier time. The connection may be established using a similar procedure to that described above to connect client controller 20 to proxy 21.

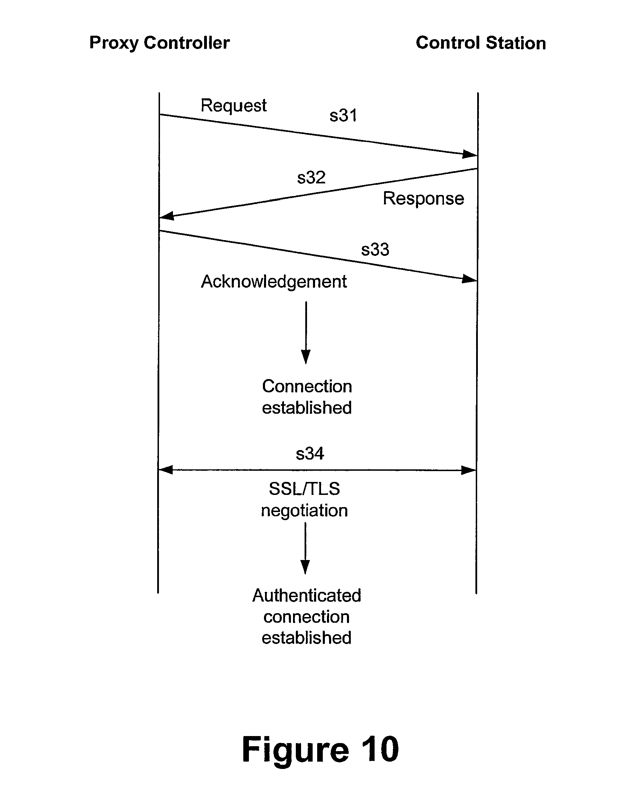

Referring to Figure 10, a process is shown for establishing a connection between the proxy controller 21 and control station 11, being largely identical to that shown in Figure 3 as between client and proxy controllers 20, 21, and to that shown in Figure 7 but with proxy controller and control/monitor station roles transposed. On startup, for example, when the proxy controller 21 is first booted up, or upon receipt or completion of a connection request from the client controller 20, the proxy controller 21 sends a TCP (Transport Control Protocol) connection request to the control station 11 on port 1073 (step s31). On the assumption that the control station 11 is already online, it acts as a server listening for incoming connection requests. When it receives the connection request, it returns a response to the proxy controller 21 (step s32), which in turn sends an acknowledgment to the control station 11 (step s33), resulting in the establishment of a TCP connection between the two, in a way which is standard and well known. Subsequently, mutual authentication and encryption set-up is carried out between the proxy controller 21 and control station 11 (step s34) using the industry standard Secure Sockets Layer (SSL) protocol, or the latest version known as the Transport Layer Security (TLS) protocol, in a way which is, once again, very well known. Once a properly authenticated connection between the proxy controller 21 and the control station 11 is established as a result of this procedure, the connection remains open, subject to equipment failure, scheduled maintenance and so on, ready for the transfer of instructions from the control station 11. The proxy controller 21 will continually try and re-establish the connection if it is lost. It may have to drop and re-establish the connection on a scheduled basis if the outer firewall 7 only allows continuous connections to exist for a certain maximum time.

Having established secure connections between client and proxy 20, 21 and between proxy and control station 21, 11, equipment control messages may be sent from the control station 11 to the client controller 20 via the proxy controller 21, as in the earlier embodiments.

Where, for example, so called "legacy" equipment is to be controlled at the remote site 3, the proxy controller 21 may be arranged to perform certain protocol conversions, providing a point of interface between the control station 11 and the client controller 20. In that arrangement, the nature of the authentication step s34 in Figure 10 may be different to that at step s4 in Figure 3, particularly where different protocols or encryption techniques are employed at each stage.

Embodiments of the invention have been described in the context of conference equipment control and monitoring of remote events. However, it will be apparent to the skilled person that the invention is applicable to a wide range of types of remote interaction with equipment, including further specific examples such as the control of broadcasting equipment and control and monitoring of security equipment.

## Claims

1. A system for remotely controlling one or more devices (1, 2) over a communications network, wherein the network includes first and second network sides and means (8) for controlling access between the first and second sides, the system comprising:
a first controller (21) connected to the network on the first network side for receiving device control messages from a control station (11); and
a second controller (20) connected to the network on the second network side, for receiving the device control messages from the first controller (21) and controlling the one or more devices (112) in response thereto;
wherein the first controller (21) is configured to send the device control messages to the second controller (20) after initiation of a connection to the first controller (21) by the second controller (20).

2. A system according to claim 1, wherein the second controller initiates the connection by sending a connection request to the first controller.

3. A system according to claim 1 or 2, wherein the access control means is configured to prevent connection requests from the first controller from reaching the second controller.

4. A system according to claim 1, 2 or 3, wherein the system is configured to maintain a connection between the first and second controllers following receipt of the connection request from the second controller at the first controller, to permit the first controller to send the device control messages to the second controller when said messages are received at the first controller.

5. A system according to claim 4, configured such that the device control messages are sent in an encrypted form.

6. A system according to any one of the preceding claims, wherein the first and second controllers are located at a site remote from the control station.

7. A system according to claim 6, wherein the communications path between the control station and the remote site comprises a wide area network (4).

8. A system according to claim 7, comprising further access control means (7) between the wide area network and the first controller.

9. A system according to any one of the preceding claims, wherein the or each access control means comprise a firewall.

10. A system according to claim 8, wherein the access control means (8) and the further access control means (7) comprise inner and outer firewalls and the first controller is connected in a demilitarised zone between the inner and outer firewalls.

11. A system according to any one of the preceding claims, wherein the first and second controllers are configured to communicate over Transport Control Protocol TCP port 1073.

12. A system according to any one of the preceding claims, wherein the control station is configured to receive information relating to an event occurring at the one or more devices via the first and second controllers.

13. A system according to claim 12, wherein the control station is configured to generate a device control message in response to the received information.

14. A system according to claim 12 or 13, wherein the control station is configured to initiate a connection to the first controller to enable it to receive said information from the first controller.

15. A system according to claim 12 or 13, wherein the first controller is configured to initiate a connection to the control station to enable the control station to receive said information from the first controller.

16. A system according to claim 15, wherein the first controller is configured to be triggered to initiate the connection to the control station after initiation of the connection to the first controller by the second controller.

17. A system according to any one of the preceding claims, wherein the second controller includes one or more device drivers for controlling said one or more devices.

18. A method of remotely controlling one or more devices (1, 2) over a communications network, wherein the network includes first and second network sides and means (8) for controlling access between the first and second sides, the method comprising:
initiating a connection to a first controller (21) connected to the network on the first network side from a second controller (20) connected to the network on the second network side;
sending device control messages from a control station (11) to the first controller (21) and then from the first controller (21) to the second controller (20).

19. A system for remotely monitoring one or more devices (1, 2) over a communications network, wherein the network includes first and second network sides and means (12) for controlling access between the first and second sides, the system comprising:
a monitor station (32) connected to the network on the first network side for receiving information concerning said one or more devices;
a first controller (31) connected to the network on the second network side for receiving said information and sending said information to the monitor station; and
a second controller (30) for monitoring the one or more devices (1, 2) and sending said information to the first controller (31);
wherein the first controller (31) configured to send said information to the monitor station (32) after initiation of a connection to the first controller (31) by the monitor station (32).

20. A system according to claim 19, wherein the system is configured to maintain a connection between the monitor station and the first controller following receipt of the connection request from the monitor station at the first controller, to permit the first controller to send information received at the first controller to the monitor station without requesting a new connection to the monitor station.

21. A system according to claim 19 or 20, wherein the monitor station is configured to generate device control messages in response to the received information.

22. A system according to claim 21, configured such that the device control messages are sent to the devices via the first and second controllers.

23. A system according to any one of claims 19 to 22, wherein the second controller (30) is connected to the network on the second network side.

24. A system according to any one of claims 19 to 23, wherein the first controller is located at a site (5) local to the monitor station and the second controller is located at a site (3) remote from the monitor station.

25. A system according to claim 24, wherein the communications path between the monitor station and the remote site comprises a wide area network (4).

26. A system according to claim 25, wherein the first controller (31) is located in a demilitarised zone between a first firewall (12) which separates the first controller from the monitor station and a second firewall (13) which separates the first controller from the wide area network.

27. A system according to claim 26, further comprising a third firewall (7) separating the second controller (30) from the wide area network (4).

28. A system according to claim 27, wherein the third firewall (7) is configured not to permit inbound connection requests to the second controller.

29. A system according to any one of claims 19 to 28, wherein the monitor station (32) and the first controller (31) are configured to communicate over Transport Control Protocol TCP port 1073.

30. A method of remotely monitoring one or more devices (1, 2) over a communications network, wherein the network includes first and second network sides and means (12) for controlling access between the first and second sides, the method comprising:
initiating a connection to a first controller (31) connected to the network on the second network side from a monitor station (32) connected to the network on the first network side;
sending event information relating to the one or more devices (1, 2) from a second controller (30) to the first controller (31) and then from the first controller (31) to the monitor station (32).

31. A method according to claim 30, further comprising generating device control messages for controlling the devices in response to the received event information.

## Patentansprüche

1. System zur Fernsteuerung einer oder mehrerer Vorrichtungen (4, 2) über ein Kommunikationsnetzwerk, das eine erste und eine zweite Netzwerkseite und eine Einrichtung (8) zur Steuerung des Zugriffs unter der ersten und der zweiten Seite umfasst, mit einer auf der ersten Netzwerkseite mit dem Netzwerk verbundenen ersten Steuereinheit (21) zum Empfangen von Vorrichtungssteuernachrichten von einer Steuerstation (11) und
einer auf der zweiten Netzwerkseite mit dem Netzwerk verbundene zweite Steuereinheit (20) zum Empfangen von Vorrichtungssteuernachrichten von der ersten Steuereinheit (21) und zum Steuern der einen bzw. der mehreren Vorrichtungen (112) als Reaktion darauf,
wobei die erste Steuereinheit (21) so konfiguriert ist, dass sie die Vorrichtungssteuernachrichten nach der Initiierung einer Verbindung zur ersten Steuereinheit (21) durch die zweite Steuereinheit (20) an die zweite Steuereinheit (20) sendet.

2. System nach Anspruch 1, bei dem die zweite Steuereinheit die Verbindung durch Senden einer Verbindungsanforderung an die erste Steuereinheit initiiert.

3. System nach Anspruch 1 oder 2, bei dem die Zugriffssteuereinrichtung so konfiguriert ist, dass sie verhindert, dass Verbindungsanforderungen von der ersten Steuereinheit die zweite Steuereinheit erreichen.

4. System nach Anspruch 1, 2 oder 3, das so konfiguriert ist, dass eine Verbindung zwischen der ersten und der zweiten Steuereinheit nach dem Empfang der Verbindungsanforderung von der zweiten Steuereinheit durch die erste Steuereinheit gehalten wird, um der ersten Steuereinheit das Senden der Vorrichtungssteuernachrichten an die zweite Steuereinheit zu ermöglichen, wenn die Nachrichten von der ersten Steuereinheit empfangen werden.

5. System nach Anspruch 4, das so konfiguriert ist, dass die Vorrichtungssteuernachrichten in verschlüsselter Form gesendet werden.

6. System nach einem der vorhergehenden Ansprüche, bei dem die erste und die zweite Steuereinheit an einem von der Steuerstation entfernten Ort angeordnet sind.

7. System nach Anspruch 6, bei dem der Kommunikationspfad zwischen der Steuerstation und dem entfernten Ort ein Weitverkehrsnetz (4) umfasst.

8. System nach Anspruch 7, das ferner eine Zugriffssteuereinrichtung (7) zwischen dem Weitverkehrsnetz und der ersten Steuereinheit umfasst.

9. System nach einem der vorhergehenden Ansprüche, bei dem die bzw. jede Zugriffssteuereinrichtung eine Firewall umfasst.

10. System nach Anspruch 8, bei dem die Zugriffssteuereinrichtung (8) und die weitere Zugriffssteuereinrichtung (7) eine innere und eine äußere Firewall umfassen und die ersten Steuereinheit in einer entmilitarisierten Zone zwischen der inneren und der äußeren Firewall angeschlossen ist.

11. System nach einem der vorhergehenden Ansprüche, bei dem die erste und die zweite Steuereinheit so konfiguriert sind, dass sie über den TCP-Anschluss 1073 (TCP: Transport Control Protocol, Übertragungssteuerprotokoll) kommunizieren.

12. System nach einem der vorhergehenden Ansprüche, bei dem die Steuerstation so konfiguriert ist, dass sie über die erste und die zweite Steuereinheit ein an der einen bzw. den mehreren Vorrichtungen auftretendes Ereignis betreffende Informationen empfängt.

13. System nach Anspruch 12, bei dem die Steuerstation so konfiguriert ist, dass sie als Reaktion auf die empfangenen Informationen eine Vorrichtungssteuernachricht erzeugt.

14. System nach Anspruch 12 oder 13, bei dem die Steuerstation so konfiguriert ist, dass sie eine Verbindung mit der ersten Steuereinheit initiiert, um ihr das Empfangen der Informationen von der ersten Steuereinheit zu ermöglichen.

15. System nach Anspruch 12 oder 13, bei dem die erste Steuereinheit so konfiguriert ist, dass sie eine Verbindung mit der Steuerstation initiiert, um der Steuerstation das Empfangen der Informationen von der ersten Steuereinheit zu ermöglichen.

16. System nach Anspruch 15, bei dem die erste Steuereinheit so konfiguriert ist, dass sie nach der Initiierung der Verbindung zur ersten Steuereinheit durch die zweite Steuereinheit aktiviert wird, um die Verbindung zur Steuerstation zu initiieren.

17. System nach einem der vorhergehenden Ansprüche, bei dem die zweite Steuereinheit eine oder mehrere Vorrichtungstreiber zum Steuern der einen bzw. der mehreren Vorrichtungen umfasst.

18. Verfahren zur Fernsteuerung einer oder mehrerer Vorrichtungen (1, 2) über ein Kommunikationsnetzwerk, das eine erste und eine zweite Netzwerkseite und eine Einrichtung (8) zur Steuerung des Zugriffs unter der ersten und der zweiten Seite aufweist, wobei das Verfahren umfasst:
die Initiierung einer Verbindung zu der auf der ersten Netzwerkseite mit dem Netzwerk verbundenen ersten Steuereinheit (21) durch eine auf der zweiten Netzwerkseite mit dem Netwerk verbundene zweite Steuereinheit (20),
das Senden von Vorrichtungssteuernachrichten von einer Steuerstation (11) an die erste Steuereinheit (21) und anschließend von der ersten Steuereinheit (21) an die zweite Steuereinheit (20).

19. System zur Fernüberwachung einer oder mehrerer Vorrichtungen (1, 2) über ein Kommunikationsnetzwerk, das eine erste und eine zweite Netzwerkseite und eine Einrichtung (8) zur Steuerung des Zugriffs unter der ersten und der zweiten Seite aufweist, mit
einer auf der ersten Netzwerkseite mit dem Netwerk verbundenen Überwachungsstation (32) zum Empfangen von die eine bzw. die mehreren Vorrichtungen betreffenden Informationen,
einer auf der zweiten Netzwerkseite mit dem Netzwerk verbundenen ersten Steuereinheit (31) zum Empfangen der Informationen und zum Senden der Informationen an die Überwachungsstation, und
einer zweiten Steuereinheit (30) zum Überwachen der einen bzw. der mehreren Vorrichtungen (1, 2) und zum Senden der Informationen an die erste Steuereinheit (31);
wobei die erste Steuereinheit (31) so konfiguriert ist, dass sie die Informationen nach der Initiierung einer Verbindung zur ersten Steuereinheit (31) durch die Überwachungsstation (32) an die Überwachungsstation (32) sendet.

20. System nach Anspruch 19, das so konfiguriert ist, dass es die Verbindung zwischen der Überwachungsstation und der ersten Steuereinheit nach dem Empfang der Verbindungsanforderung von der Überwachungsstation durch die erste Steuereinheit aufrechterhält, um der ersten Steuereinheit das Senden der von der ersten Steuereinheit empfangenen Informationen an die Überwachungsstation ohne die Anforderung einer neuen Verbindung zur Überwachungsstation zu ermöglichen.

21. System nach Anspruch 19 oder 20, bei dem die Überwachungsstation so konfiguriert ist, dass sie als Reaktion auf die empfangenen Informationen Vorrichtungssteuernachrichten erzeugt.

22. System nach Anspruch 21, das so konfiguriert ist, dass die Vorrichtungssteuernachrichten über die erste und die zweite Steuereinheit and die Vorrichtungen gesendet werden.

23. System nach einem der Ansprüche 19 bis 22, bei dem die zweite Steuereinheit (30) auf der zweiten Netzwerkseite mit dem Netzwerk verbunden ist.

24. System nach einem der Ansprüche 19 bis 23, bei dem die erste Steuereinheit an einem Ort (5) bei der Überwachungsstation und die zweite Steuereinheit an einem von der Überwachungsstation entfernten Ort (3) angeordnet ist.

25. System nach Anspruch 24, bei dem der Kommunikationspfad zwischen der Überwachungsstation und dem entfernten Ort ein Weitverkehrsnetz (4) umfasst.

26. System nach Anspruch 25, bei dem die erste Steuereinheit (31) in einer entmilitarisierten Zone zwischen einer ersten Firewall (12), die die erste Steuereinheit von der Überwachungsstation trennt, und einer zweiten Firewall (13) angeordnet ist, die die erste Steuereinheit von dem Weitverkehrsnetz trennt.

27. System nach Anspruch 26, das ferner eine dritte Firewall (7) aufweist, die die zweite Steuereinheit (30) von dem Weitverkehrsnetz (4) trennt.

28. System nach Anspruch 27, bei dem die dritte Firewall (7) so konfiguriert ist, dass sie keine eingehenden Verbindungsanforderungen an die zweite Steuereinheit zulässt.

29. System nach einem der Ansprüche 19 bis 28, bei dem die Überwachungsstation (32) und die erste Steuereinheit (31) so konfiguriert sind, dass sie über den TCP-Anschluss 1073 (TCP: Transport Control Protocol, Übertragungssteuerprotokoll) kommunizieren.

30. Verfahren zur Fernüberwachung zur Fernüberwachung einer oder mehrerer Vorrichtungen (1, 2) über ein Kommunikationsnetzwerk, das eine erste und eine zweite Netzwerkseite und eine Einrichtung (12) zur Steuerung des Zugriffs unter der ersten und der zweiten Seite aufweist, wobei das Verfahren umfasst:
die Initiierung einer Verbindung zu der auf der zweiten Netzwerkseite mit dem Netzwerk verbundenen ersten Steuereinheit (31) durch eine auf der ersten Netzwerkseite mit dem Netwerk verbundene Überwachungsstation (32),
das Senden von die eine bzw. die mehreren Vorrichtungen (1, 2) betreffenden Ereignisinformationen von einer zweiten Steuereinheit (30) an die erste Steuereinheit (31) und anschließend von der ersten Steuereinheit (31) an die Überwachungsstation (32).

31. Verfahren nach Anspruch 30, das ferner die Erzeugung von Vorrichtungssteuerriachrichten zum Steuern der Vorrichtungen als Reaktion auf die empfangenen Ereignisinformationen umfasst.

## Revendications

1. Système de commande à distance d'un ou plusieurs dispositifs (1, 2) sur un réseau de communications, où le réseau comprend un premier et un second côtés de réseau et un moyen (8) destiné à commander l'accès entre les premier et second côtés, le système comprenant :
un premier contrôleur (21) connecté au réseau sur le premier côté du réseau destiné à recevoir des messages de commande de dispositif provenant d'une station de commande (11), et
un second contrôleur (20) connecté au réseau sur le second côté du réseau, destiné à recevoir les messages de commande de dispositif provenant du premier contrôleur (21) et à commander les un ou plusieurs dispositifs (1, 2) en réponse à ceux-ci,
dans lequel le premier contrôleur (21) est configuré pour envoyer les messages de commande de dispositif au second contrôleur (20) après le lancement d'une connexion au premier contrôleur (21) par le second contrôleur (20).

2. Système selon la revendication 1, dans lequel le second contrôleur initie la connexion en envoyant une demande de connexion au premier contrôleur.

3. Système selon la revendication 1 ou 2, dans lequel le moyen de commande d'accès est configuré pour empêcher que des demandes de connexion provenant du premier contrôleur n'atteigne le second contrôleur.

4. Système selon la revendication 1, 2 ou 3, dans lequel le système est configuré pour maintenir une connexion entre les premier et second contrôleurs après la réception de la demande de connexion provenant du second contrôleur au niveau du premier contrôleur, afin de permettre que le premier contrôleur envoie les messages de commande de dispositif au second contrôleur lorsque lesdits messages sont reçus au niveau du premier contrôleur.

5. Système selon la revendication 4, configuré de sorte que les messages de commande de dispositif sont envoyés sous une forme cryptée.

6. Système selon l'une quelconque des revendications précédentes, dans lequel les premier et second contrôleurs sont situés à un site éloigné de la station de commande.

7. Système selon la revendication 6, dans lequel la voie de communications entre la station de commande et le site éloigné comprend un, réseau étendu (4).

8. Système selon la revendication 7, comprenant un autre moyen de commande d'accès (7) entre le réseau étendu et le premier contrôleur.

9. Système selon l'une quelconque des revendications précédentes, dans lequel le ou chaque moyen de commande d'accès comprend un pare-feu.

10. Système selon la revendication 8, dans lequel le moyen de commande d'accès (8) et l'autre moyen de commande d'accès (7) comprennent des pare-feux intérieurs et extérieurs et le premier contrôleur est connecté dans une zone démilitarisée entre les pare-feux intérieurs et extérieurs.

11. Système selon l'une quelconque des revendications précédentes, dans lequel les premier et second contrôleurs sont configurés pour communiquer sur un port de protocole de commande de transport TCP 1073.

12. Système selon l'une quelconque des revendications précédentes, dans lequel la station de commande est configurée pour recevoir des informations se rapportant à un événement se produisant au niveau des un ou plusieurs dispositifs par l'intermédiaire des premier et second contrôleurs.

13. Système selon la revendication 12, dans lequel la station de commande est configurée pour générer un message de commande de dispositif en réponse aux informations reçues.

14. Système selon la revendication 12 ou 13, dans lequel la station de commande est configurée pour initier une connexion au premier contrôleur afin de lui permettre de recevoir lesdites informations du premier contrôleur.

15. Système selon la revendication 12 ou 13, dans lequel le premier contrôleur est configuré pour initier une connexion à la station de commande afin de permettre que la station de commande reçoive lesdites informations du premier contrôleur.

16. Système selon la revendication 15, dans lequel le premier contrôleur est configuré pour être déclenché afin d'initier la connexion à la station de commande après le lancement de la connexion vers le premier contrôleur par le second contrôleur.

17. Système selon l'une quelconque des revendications précédentes, dans lequel le second contrôleur comprend un ou plusieurs pilotes de dispositifs destinés à commander lesdits un ou plusieurs dispositifs.

18. Procédé de commande à distance d'un ou plusieurs dispositifs (1, 2) sur un réseau de communications, où le réseau comprend des premier et second côtés de réseau et un moyen (8) destiné à commander l'accès entre les premier et second côtés, le procédé comprenant les étapes consistant à :
initier une connexion à un premier contrôleur (21) connecté au réseau sur le premier côté de réseau à partir d'un second contrôleur (20) connecté au réseau sur le second côté du réseau,
envoyer des messages de commande de dispositif à partir d'une station de commande (11) au premier contrôleur (21) et ensuite du premier contrôleur (21) au second contrôleur (20).

19. Système de surveillance à distance d'un ou plusieurs dispositifs (1, 2) sur un réseau de communications, dans lequel réseau comprend des premier et second côtés de réseau et un moyen (12) destiné à commander un accès entre les premier et second côtés, le système comprenant :
une station de surveillance (32) connectée au réseau sur le premier côté du réseau destinée à recevoir des informations concernant lesdits un ou plusieurs dispositifs,
un premier contrôleur (31) connecté au réseau sur le second côté du réseau destiné à recevoir lesdites informations et à envoyer lesdites informations à la station de surveillance, et
un second contrôleur (30) destiné à surveiller les un ou plusieurs dispositifs (1, 2) et à envoyer lesdites informations au premier contrôleur (31) ;
dans lequel le premier contrôleur (31) est configuré pour envoyer lesdites informations à la station de surveillance (32) après le lancement d'une connexion au premier contrôleur (31) par la station de surveillance (32).

20. Système selon la revendication 19, dans lequel le système est configuré pour maintenir une connexion entre la station de surveillance et le premier contrôleur après la réception de la demande de connexion provenant de la station de surveillance au premier contrôleur, pour permettre que le premier contrôleur envoie les informations reçues au niveau du premier contrôleur à la station de surveillance sans demander une nouvelle connexion à la station de surveillance.

21. Système selon la revendication 19 ou 20, dans lequel la station de surveillance est configurée pour générer des messages de commande de dispositif en réponse aux informations reçues.

22. Système selon la revendication 21, configuré de sorte que les messages de commande de dispositif sont envoyés aux dispositifs par le biais des premier et second contrôleurs.

23. Système selon l'une quelconque des revendications 19 à 22, dans lequel le second contrôleur (30) est connecté au réseau sur le second côté du réseau.

24. Système selon l'une quelconque des revendications 19 à 23, dans lequel le premier contrôleur est situé à un site (5) local pour la station de surveillance et le second contrôleur est situé à un site (3) éloigné de la station de surveillance.

25. Système selon la revendication 24, dans lequel la voie de communications entre la station de surveillance et le site éloigné comprend un réseau étendu (4).

26. Système selon la revendication 25, dans lequel le premier contrôleur (31) est situé dans une zone démilitarisée entre un premier pare-feu (12) qui sépare le premier contrôleur de la station de surveillance et un deuxième pare-feu (13) qui sépare le premier contrôleur du réseau étendu.

27. Système selon la revendication 26, comprenant en outre un troisième pare-feu (7), séparant le second contrôleur (30) du réseau étendu (4).

28. Système selon la revendication 27, dans lequel le troisième pare-feu (7) est configuré pour ne pas permettre de demande de connexion entrante au second contrôleur.

29. Système selon l'une quelconque des revendications 19 à 28, dans lequel la station de surveillance (32) et le premier contrôleur (31) sont configurés pour communiquer sur un port de protocole de commande de transport TCP 1073.

30. Procédé de surveillance à distance d'un ou plusieurs dispositifs (1, 2) sur un réseau de communications, dans lequel le réseau comprend des premier et second côtés du réseau et un moyen (12) destiné à commander l'accès entre les premier et second côtés, le procédé comprenant les étapes consistant à :
initier une connexion à un premier contrôleur (31) connecté au réseau sur le second côté du réseau à partir d'une station de surveillance (32) connectée au réseau sur le premier côté du réseau,
envoyer des informations d'événement se rapportant aux un ou plusieurs dispositifs (1, 2) d'un second contrôleur (30) au premier contrôleur (31) et ensuite du premier contrôleur (31) à la station de surveillance (32).

31. Procédé selon la revendication 30, comprenant en outre la génération de messages de commande de dispositif destiné à commander des dispositifs en réponse aux informations d'événement reçues.
